# EUROPEAN PATENT APPLICATION

(11) **EP 1 139 087 A2**
(43) Date of publication of application: **04.10.2001**
(21) Application number: 01301748.8
(22) Date of filing: 26.02.2001
(51) Int. Cl.: G01N 1/34

(54) **Device and method for solid phase extraction**

(30) Priority: 24.03.2000 US 535227
(71) Applicant: MILLIPORE CORPORATION, Bedford Massachusetts 01730 (US)
(72) Inventor: Bonhomme, Louis, Waltham, Massachusetts 02154 (US); Spillman, Robert, Boxford, Massachusetts 01921 (US)
(74) Representative: Greenwood, John David

(57) **Abstract**

Sample preparation device and method for removing impurities and undesired matter from samples prior to further analysis such as by MALDI or electro-spray ionization (ESI). The sample preparation device, such as a standard pipette tip, has chromatography media bound to the inside surface of the tip so as to create a monolayer of particles that are readily accessible to fluids that flow through the pipette tip. The device can be used for washing, protein binding, elution processes, etc. A method of sample preparation using the device of the present invention is also disclosed.

## Description

Matrix-assisted laser desorption/ionization (MALDI) analysis is useful for solving structural problems in biochemistry, immunology, genetics and biology. Samples are ionized and a time of flight (TOF) analyzer is used to measure ion masses. TOF analysis begins when ions are formed and are accelerated to a constant kinetic energy as they enter a drift region. They arrive at a detector following flight times that are proportional to the square root of their masses. A mass spectrum is created because ions of different mass arrive at the detector at different times.

Mass spectrometry can be a powerful tool in the fields of drug discovery and development, genotyping, and proteome research. Current trends in research are to analyze larger and larger numbers of samples using automated handling equipment. Quantities of individual samples are from the micro-mole levels to femta-mole levels. As a result, instrumentation is becoming smaller and a need exists for sample handling formats to be miniaturized, high density and disposable.

The resolution and selectivity of the mass spectrum can be improved when undesired salts and biological matter are removed from the target proteins, peptides, carbohydrates or other biomolecules.

The present invention is as claimed in the claims.

Embodiments of the present invention may provide improved resolution and/or selectivity of mass spectrometry analysis of samples.

Embodiments of the present invention can provide a sample preparation device and method for desalting and purification of samples prior to matrix assisted laser desorption ionization (MALDI) or electro-spray ionization (ESI) mass spectrometry and other analysis methods and provide a high-density multi-well card wherein various arrays within the card contain chromatographic media having the same or different chemistries.

Problems of the prior art have been overcome by the present invention, one embodiment of which provides a sample preparation device and method for removing impurities and undesired matter from samples prior to further analysis such as by MALDI TOF and/or electro-spray ionization (ESI) mass spectrometry. A device of the present invention may include a substrate and a monolayer of particles adhered to a surface of the substrate so as to form a device capable of carrying out solid phase extraction. In a preferred embodiment, the sample preparation device comprises a standard pipette tip having chromatography media bound to a surface of the tip so as to create a monolayer of particles that are readily accessible to fluids that flow through the pipette tip. The device can be used for adsorption washing, elution processes, etc. The sample preparation device also may be a multi-well card having a layer of chromatography media bound to a surface of each well within the card. The present invention is also directed towards a method of sample preparation.

Flow resistance is much lower for the sample preparation device of the present invention than for conventional devices such as particle-impregnated porous polymeric structures. Such conventional devices have polymer scaffolds that restrict the flow of solutions through the structure. The opportunity for and variability of flow rate and backpressure decreases as the amount of polymer scaffolding and its random macrostructure is decreased. Since the media is not encased in a three-dimensional polymeric matrix, there is less probability that the media will be coated by the polymer and impede biomolecule binding. In view of the high consistency and less resistance to flow, automated, fast sample preparation and analysis can be conducted using devices and methods according to the present invention.

Embodiments of the invention will now be described by way of example only, of which:
Figure 1 is a cross-sectional view of one embodiment of a sample preparation device in accordance with the present invention;
Figure 2 is a cross-sectional view another embodiment of a sample preparation device in accordance with the present invention;
Figure 3 is a cross-sectional view of media bound to the sample preparation device of Figure 2;
Figure 4 is a perspective view of a probe having surface bonded particles adhered to an inner and outer surface;
Figure 5 is a photograph of spherical particles for use in the sample preparation device of the present invention;
Figure 6 is a perspective view of a porous plug or disk for insertion into a sample preparation device of the present invention;
Figure 7(a) is a top view of an embodiment of a housing for a sample preparation device of the present invention;
Figure 7(b) is a top view of another embodiment of a housing for a sample preparation device of the present invention;
Figure 8 is a perspective view of a further embodiment of the present invention;
Figure 9 is a partial perspective view of several wells of the embodiment of Figure 8; and
Figure 10 is a perspective view of a single well of the embodiment of Figure 8.

Suitable substrate materials for the sample preparation device of the present invention are not particularly limited, and include plastics (such as polyethylene and polypropylene), glass and stainless steel. The substrate materials should not interfere with the operation of the device or the chemicals to be used in the procedure. Polyolefins, and particularly polypropylene, are preferred materials. Suitable configurations are also not particularly limited, and include housings such as pipette tips, wells, multi-well arrays, and plastic and glass cavities. One preferred housing configuration is substantially cylindrical, as the flow vectors during operation are substantially straight, similar to chromatography. The term "substantially cylindrical" is intended to include pipette tips wherein the diameter of the tip narrows towards one end, usually the discharge end, thereby forming a conical shaped housing. Although housings with volumes between about 0.1 µl and about 5 mls. can be used, volumes less than about 100µl are preferred, with volumes of from about 0.1-50µl, preferably from about 0.1-20µl, are especially preferred. Pipette tip geometries having volumes as small as about 5 microliters can be used. Preferably the housing are constructed of a disposable material.

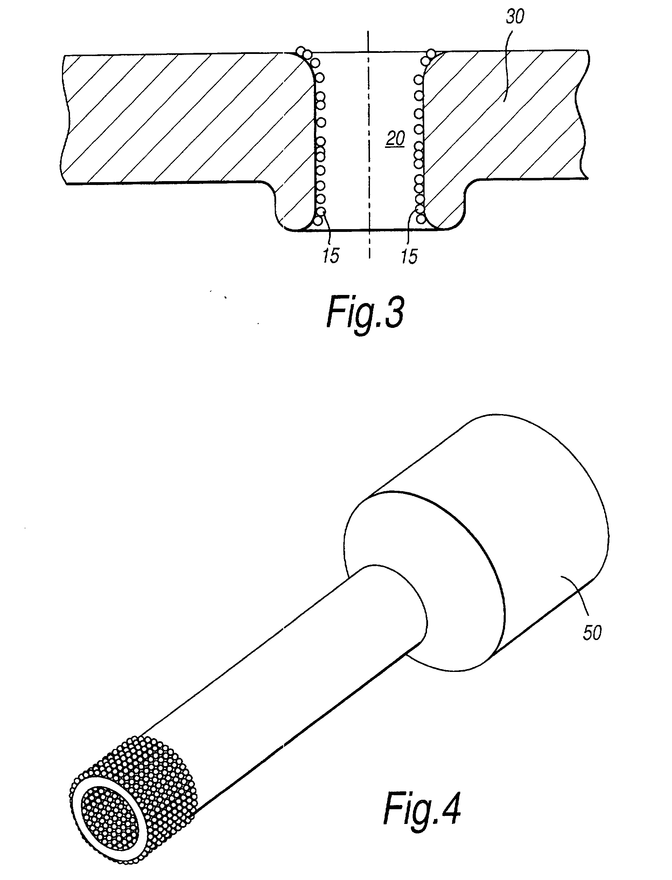

Alternatively, the substrate can be in the form of a probe 50 such as that shown in Figure 4, having a plurality of surface bonded particles adhered to at least one surface of the probe 50. In the embodiment shown, the particles are adhered to both an inner and outer surface of the probe.

The substrate also can be made of flexible material, enabling the formation of a continuous roll, which can be unwound in a continuous operation as it is used.

Various methods can be used to adhere the particles to the substrate. For example, in a preferred embodiment of the present invention, the substrate is wetted with a suitable adhesive. For example, in an embodiment where the substrate forms a housing, the inner wall of the housing, or a portion thereof, is wetted with the adhesive. The amount of adhesive chosen, and the dimensions of the portion of the substrate to be wetted, depend upon the amount of media desired to be bound to the substrate. For example, where the substrate is a pipette tip housing, preferably a portion of the tip's length containing the media is from about 0.1 micrometer to about 10 millimeters. Preferably the thickness of the adhesive coating on the surface of the housing is uniform in thickness and is within a range of about 5 micrometers to about 1.0 millimeters. Although the procedure used to apply the adhesive to the inner wall of the housing is not particularly limited, one suitable method is to draw a liquid adhesive into the housing with a suitable driving force, such as a syringe, and after a sufficient residence time of the adhesive in the housing (e.g., two seconds), expelling excess adhesive into a suitable receptacle with the driving force. To ensure that no excess adhesive remains in the housing, air or an inert gas can be blown through the housing to expel any excess. Very low fluid hold-up volumes are possible when the thickness of the adhesive is consistent.

Another suitable method for'coating the adhesive to a surface of the substrate is by immersing the substrate, or a suitable portion thereof, directly into a bath of the adhesive, and then removing the substrate therefrom. Again, excess adhesive can be expelled using air or an inert gas as before.

Suitable adhesives include, but are not limited to, silicone elastomers, silicone RTV sealant, ultraviolet cured adhesives, hotmelt thermoplastic adhesives, and thermoset adhesives.

The media is bonded to a surface of the substrate in a manner that creates at least a monolayer of particles that are accessible to fluid that flows through or over the substrate during operation of the device. Preferably at least 30%, more preferably 70% of each particle's surface area is available for binding of solutes such as protein and peptides, oligonucleotides, for example. Those skilled in the art can calculate the available surface area of the particles using Pappas' Theorem, for example. The media can be bound to a surface of the substrate at any point along the substrate. In the embodiment where the substrate is a housing comprising a standard pipette tip having a first open end and a second open end spaced from the first open end, the first open end having a diameter smaller than the second open end, the media is preferably bound to the inner surface of this housing so that the resulting structure has a first end that is contiguous or substantially contiguous with the first open end and extends in a direction towards the second open end. Alternatively or in addition, the media can be bound to an outer surface of a housing in a like manner, as shown in Figure 4.

Still other mechanisms for adhering the particles to the substrate include softening the substrate sufficiently to allow the particles to become embedded therein, and then allowing the substrate to harden once the solvent is removed such as by evaporation. Methods of softening the substrate can include contact with a suitable solvent or heating the substrate to a suitable temperature, such as with a laser. Alternatively, the particles could be embedded in the substrate by contacting the particles with the substrate at high velocity.

In the embodiment where the sample preparation device is a pipette tip or similar device, preferably the structures of the present invention have a final coating height of from about 0.01 to about 27mm. This allows for good washing and good binding capacity per unit volume.

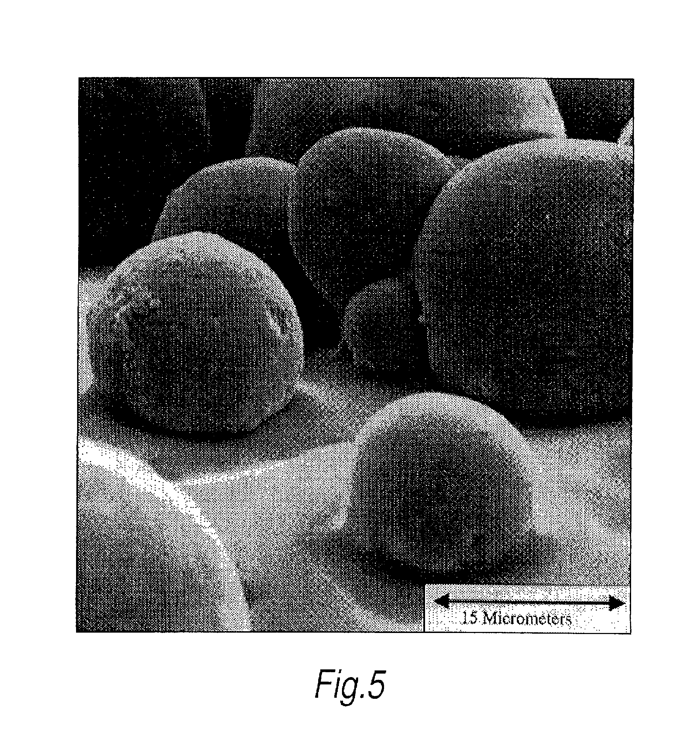

The particles used as the chromatography media can have various shapes and size. The term "particles" as used herein is intended to encompass particles having regular (e.g., spherical) or irregular shapes, as well as shards, fibers and powders, including metal powders, plastic powders (e.g., powdered polystyrene), normal phase silica, fumed silica and activated carbon. Preferably the particles are spherical, such as shown in the photograph of Figure 5. Suitable media includes silica, such as C18 bonded silica or C4 silica, ion exchange media or agarose beads, or a variety of affinity chemistry media well known to those skilled in the art. The size of the particles is not particularly limited, and may depend upon the application. Sizes less than or greater than 1 micron are suitable.

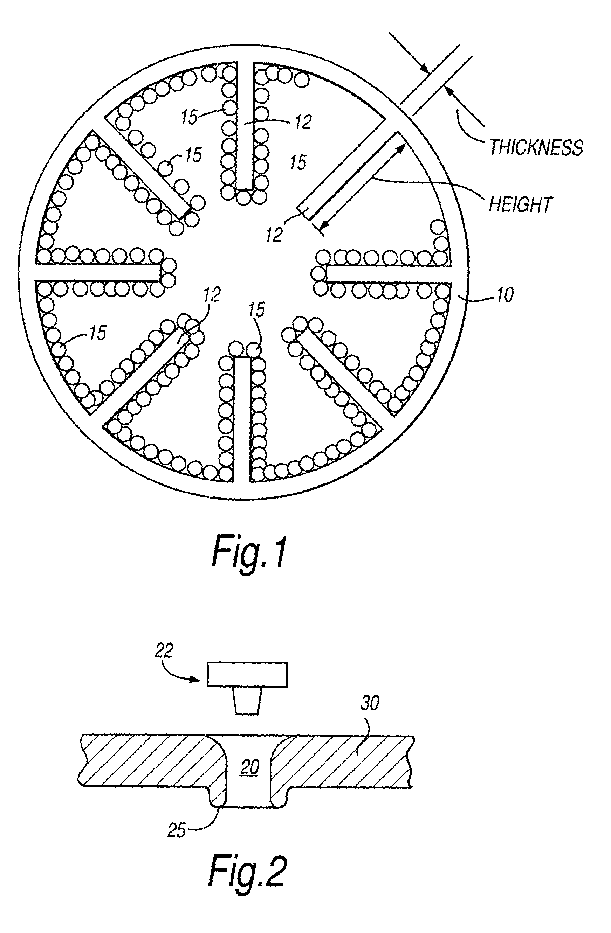

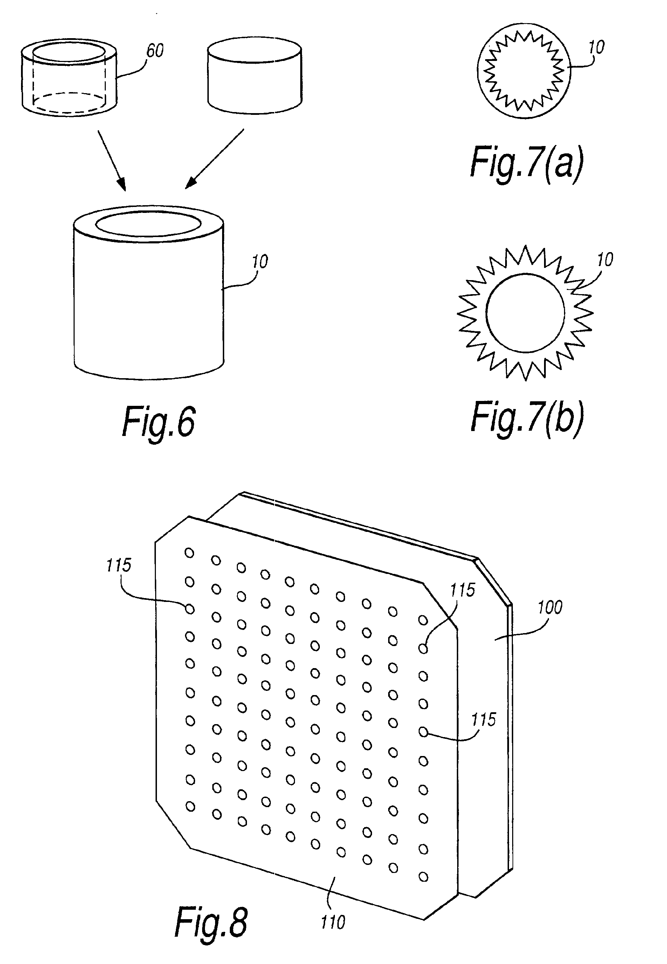

In another embodiment of the present invention, the effective surface area of the substrate can be increased. One example of such a substrate is shown in Figure 1. Housing 10 has one or more fins 12 extending radially inwardly from the wall of the housing 10 towards the center of the housing. Those skilled in the art will be able to choose suitable fin numbers and dimensions and sealant viscosity to optimize performance. The fins can be molded in the housing or can be added to an existing housing such as in the form of an insert. The chromatography particles 15 are shown bound to the surface of the fins as well as the inner surface of the housing 10, thereby maximizing binding surface area of the media. Other suitable techniques for increasing the effective surface area are the addition of a porous plug or disk 60 to the housing 10 as shown in Figure 6; molded in features such as grooves formed into either the inner diameter (Figure 7a) or outer diameter (Figure 7b) of the housing; and insertion of non-woven or woven fibers into the housing.

In a further embodiment of the present invention, the substrate is a multi-well plate 30, such as a 96, 384 or higher density plate. With reference to Figure 2, preferably each well of the plate 30 is formed with a spout, such as by drilling the wells 20 with a laser 22 (CO₂ or eximer laser) from above while applying a vacuum to the underside of the plate 25. The spouts direct flow downward and reduce the effects of cross contamination due to surface tension wetting on the bottom surface of the plates. A suitable adhesive is applied to the inner walls of the plates, and the media is then bound to the adhesive as shown in Figure 3. Different types of silica, chromatography media and affinity chemistries can be applied to different wells in the same device, if desired.

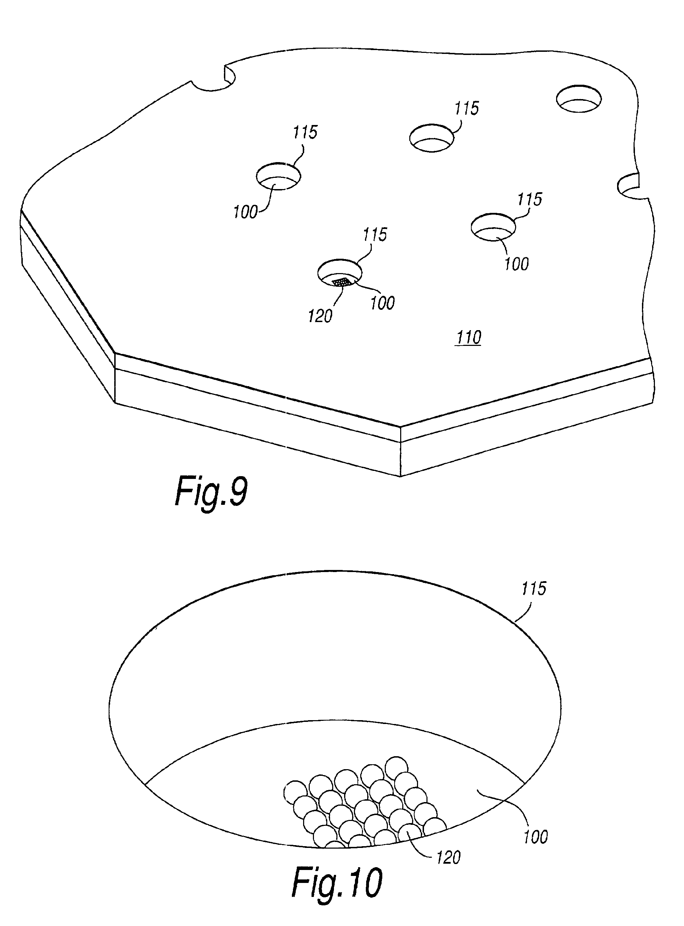

With reference to Figures 8, 9 and 10, another embodiment of the present invention is illustrated, in which the multi-well array includes a substrate 100, which can be a rigid porous plate or solid plate preferably made of electrically conductive material for MALDI TOF mass spectrometry applications. The substrate can be disposable if contamination is an issue. The substrate may also be flexible, such as a thin sheet of electrically conductive plastic, when non-rigid formats are desired. A laminate film or sheet 110, such as one made of polyethylene, polypropylene, polystyrene, polyamide, polyimide, polytetrafluoroethylene, TEFLON or the like, or a conductive tape or foil, is adhered to the top surface of the substrate. The sheet 110 is preferably co-extensive with the substrate 100. Suitable sheet thicknesses range from about 15 micrometers to about 10 millimeters, most preferably about 3 mils (0.0762 millimeters), thick. An adhesive (such as those mentioned above) is applied to the top surface of the substrate and/or the bottom surface of the sheet 110 prior to affixing the sheet 110 thereto. The sheet 110 includes a plurality of holes 115, preferably 200 micro inches in diameter, which can be formed by laser drilling. Once the sheet 110 is adhered to the substrate 100, the holes 115 and substrate below the holes define the wells of the device, as shown in Figures 9 and 10. The thickness of the sheet 110 determines the depth of the wells. Since the substrate exposed below the holes is coated with adhesive, particles 120 can be introduced onto the adhesive and adhered thereto. Particles or media with different chemistries can be introduced into different wells, if desired. The sheet 110 prevents cross-talk amongst the wells.

Suitable particles are not limited to reversed phase silica ion exchange media or agarose beads; a variety of affinity chemistry media could be used as well. Suitable sheet material also includes PTFE/silicone film.

The media and the sample preparation devices of the present invention containing the media have a wide variety of applications, depending upon the media selection. For example, applications include peptide and protein sample preparation prior to analysis, peptide removal from carbohydrate samples, amino acid clean-up prior to analysis, immobilized enzymes for micro-volume reactions, immobilized ligands for micro-affinity chromatography, isolation of supercoiled and cut plasmids, clean-up of PCR and DNA products, immobilized oligo dT for RNA isolation, dye terminator removal, sample preparation for elemental analysis, etc. Those skilled in the art will be able to choose the appropriate media chemistry depending upon the desired application. In some cases, a mixture of chromatographic resins can be used in the same devices. Alternatively or in addition, a multi-well device could have different chemistries for each separate well. Where necessary, suitable driving forces to effectuate sample preparation include centrifugation, gravity, pressure or vacuum.

Without limitation, the following examples illustrate the objects and advantages of the present invention.

### EXAMPLE 1

Silicone RTV sealant was drawn into a P100 standard pipette tip using a syringe. After two seconds, the RTV sealant was expelled from the tip. The tip was then blown to clear excess sealant from the walls of the tip, leaving a thin coating of sealant on the walls.

Less than one gram of reversed phase C18-200-15SP (Millipore p/n 35136) silica beads was dropped through the large opening of the tip and allowed to pass downward through the tip. Most of the silica fell through the tip, but a thin monolayer of silica beads bonded to the sealant. The tip was tapped on a substrate to remove any unbound silica.

### EXAMPLE 2

A rubber adhesive coated film of 3 mil thick UHMW tape acquired from CS Hyde Company, type 800-461-4161, was die cut using a steel rule die. Two sheets of UHMW film were laminated together such that 35 holes with adhesive bottoms were exposed. A small sample of C18-200-15SP silica was sprinkled over each hole. The thin layer of silica that did not bond to the tape was washed away using 18 Ohm MILLI-Q water.

### EXAMPLE 3

A CO₂ laser was used to form a plurality of holes into a natural rubber adhesive backed UHMW film. In order to simulate a 10,000 well card within a 2 inch by 2 inch area, 0.015 inch diameter holes, spaced 0.10 inches apart, were formed by the laser. The carrier paper was removed, and the film was applied to another natural rubber adhesive backed UHMW film. Particles of C18 silica were successfully bonded to the bottom of the wells formed.

## Claims

1. A housing defining a volume and having an inner surface, said housing containing in a portion of said volume a plurality of sorptive particles bound to said inner surface with an adhesive.

2. The housing of claim 1, wherein said housing has a first open end and a second open end spaced from said first open end, and wherein some of said plurality of sorptive particles are contiguous with said second open end.

3. The housing of claim 1 or 2, wherein said portion of said volume containing said particles is from about 0.1 microliters to about 10 milliliters.

4. The housing of any preceding claim, wherein said housing is a pipette tip having a first end and a second end spaced from said first end with said particles in between, and, optionally wherein said first end has an internal diameter smaller than the internal diameter of said second end.

5. The housing of any preceding claim, wherein each of said plurality of particles has at least 30% of its surface area available for binding.

6. A substrate having a monolayer of particles adhered to it such at least 30% of the surface area of said particles is available for binding.

7. The substrate of claim 6, wherein said particles are adhered to said substrate with an adhesive or are embedded in said substrate.

8. A method of forming a sample preparation device, comprising:
providing a substrate having a surface;
coating a portion of said surface with an adhesive; and
contacting said coated surface with a plurality of sorptive particles.

9. The method of claim 8, wherein said substrate has an inner surface and an outer surface, and wherein said portion of said surface coated with said adhesive is a portion of said inner surface and/or is a portion of said outer surface.

10. A sample preparation device, comprising:
a substrate coated with adhesive;
a sheet having at least one hole formed therein, said sheet overlaying said substrate, such that a portion of said coated substrate below said at least one hole remains exposed; and
a plurality of sorptive particles adhered to said exposed portion of said substrate.

11. The sample preparation device of claim 10, wherein said sheet is 15 micrometers to 10 millimeters in thickness and/or wherein a plurality of holes are formed in said sheet.

12. A substrate having a surface on which are fixed a plurality of sorptive particles.

13. A substrate as claimed in claim 12 in which the particles are fixed on the surface by an adhesive, by adhesion, or by being embedded in the surface, and/or in which the particles form at least a monolayer over a portion of the surface.
